# EUROPEAN PATENT APPLICATION

(11) **EP 2 852 114 A1**
(43) Date of publication of application: **25.03.2015**
(21) Application number: 13185400.2
(22) Date of filing: 20.09.2013
(51) Int. Cl.: H04L 12/803

(54) **A method and apparatus to control energy consumption in a communication network**

(71) Applicant: ALCATEL LUCENT, 92100 Boulogne-Billancourt (FR)
(72) Inventor: Verchere, Dominique, 91620 Nozay (FR); Morea, Annalisa, 91620 Nozay (FR); Vigoreux, Martin, 91620 Nozay (FR)
(74) Representative: Camus, Olivier Jean-Claude

(57) **Abstract**

A method to control energy consumption in a communication network (145) that comprises a first node (101) and a second node (103) as egress and/or ingress points for data traffic, and a first data path (125) and a second data path (127) between the first node (101) and the second node (103), said data traffic moving across the first data path (125) and/or the second data path (127), said method comprising the following steps:
- setting (301) a first (207) and a second (209) data traffic capacity thresholds respectively for the first (125) and second (127) data paths, said first data traffic capacity threshold (207) being greater than said second data traffic capacity threshold (209),
- associating (303) the second data path (127) with the first data path (125) as an energy consumption associated data path of the first data path (125),
- setting (305) a first path energy mode for the first data path (125),
- evaluating (307) an ingress and/or egress data traffic quantity on the first node (101), and,
- if the ingress and/or egress data traffic quantity is less than or equal to the second data traffic capacity threshold (209), then:
o routing (311) the data traffic moving across the first data path (125) to the energy consumption associated data path of the first data path (125),
o setting (313) the first path energy mode of the first data path (125) in a lower energy consumption mode.

## Description

### FIELD OF THE INVENTION

The present invention relates to control energy consumption in a communication network.

### BACKGROUND OF THE INVENTION

Data traffic volume carried over communication networks is in constant increase. Network equipments and data links are evolving to fit the needs of operators to tailor their communication networks to be able to absorb data traffic peaks. However data traffic volume may increase but it also varies in time. While communication networks may be experiencing congestion at busy hours, they are frequently over-provisioned in terms of capacity during non busy hours. Data traffic volume profile may also evolve on different time scale depending on multiple factors. In a non limiting example, a metropolitan area network may need less communication networks capacity during non business hours or weekends compared to working day periods.

Over-provisioning of capacity of communication networks while data traffic demand is lower than maximum or nominal capacity, results in network equipments and data links consuming more energy than practically needed.

A solution based on communication network re-provisioning upon failures exists ("RSVP-TE Extensions in Support of End-to-End GMPLS Recovery" J.P. Lang et al. IETF RFC4872, February 2004), but it is not suitable because it does not provide enough flexibility and service continuity to ensure a proper quality of delivered data traffic, when demands of said data traffic are varying over some time periods.

It is then needed to define a solution to control energy consumption in communication networks that provides flexibility and ensures service continuity.

### SUMMARY OF THE INVENTION

The invention aims to remedy all or some of the disadvantages of the above identified prior art. It particularly proposes to perform a more adapted control of energy consumption in a communication network.

To this end, it is offered to use a method involving evaluation of data traffic quantity.

A first aspect of the invention relates then to a method to control energy consumption in a communication network. Said communication network comprises a first node and a second node as egress and/or ingress points for data traffic. The communication network further comprises a first data path and a second data path between the first node and the second node. Said data traffic is moving across the first data path and/or the second data path. The method comprises the following steps:
- setting a first and a second data traffic capacity thresholds respectively for the first and second data paths, said first data traffic capacity threshold is greater than said second data traffic capacity threshold,
- associating the second data path with the first data path as an energy consumption associated data path of the first data path,
- setting a first path energy mode for the first data path,
- evaluating an ingress and/or egress data traffic quantity on the first node, and,
- if the ingress and/or egress data traffic quantity is less than or equal to the second data traffic capacity threshold, then:
   ○ routing the data traffic moving across the first data path to the energy consumption associated data path of the first data path,
   ○ setting the first path energy mode of the first data path in a lower energy consumption mode.

Thus, thanks to these features, the method enables to control the energy consumption in the communication network by evaluating the data traffic and routing it accordingly from a higher capacity data path such as the first data path, to a smaller capacity data path such as the second data path. Such a method is advantageous while said smaller capacity data path consumes less energy than higher capacity data path.

According to various embodiments, such method comprises one or more of the features below, which should be considered in any possible technical combinations:
- the lower energy consumption mode comprises an idle state or a deactivated state,
- performing the following steps:
   ○ associating the first data path with the second data path as an energy consumption associated data path of the second data path,
   ○ if the ingress and/or egress data traffic quantity is greater than the second data traffic capacity threshold, then:
      ■ routing the data traffic moving across the second data path to the second energy consumption associated data path,
      ■ setting the first path energy mode in a higher energy consumption mode.
- the higher energy consumption mode comprises an activated state,
- providing the lastly set first path energy mode to the first node and to the second node,
- setting a first transceiver energy mode of a first transceiver device comprised in the first node, and a second transceiver energy mode of a second transceiver device comprised in the second node, accordingly to the first path energy mode. Said first and second transceiver devices belong to the first data path.

Those embodiments may be devised with various technical characteristics recited herein below, which should be considered in any possible technical combinations:
- communication network is operated through Network Management Procedures or Control Plane functions including the Resource Reservation Protocol - Traffic Engineering (RSVP-TE),
- the energy consumption associated data path of the first data path and the energy consumption associated data path of the second data path are identified by a dedicated value for the object Association Type of an ASSOCIATION Object, and by combining said dedicated value with others objects of the ASSOCIATION Object, according to the RSVP-TE protocol,
- the dedicated value for the object Association Type is a value not already allocated by Internet Assigned Number Authority (IANA), including the value 7,
- the first path energy mode is provided to the first node and the second node through Path and Resv messages or Notify messages,
- the communication network is a Generalized Multi-Protocol Label Switching (GMPLS) network and the first data path and the second data path are label-switched path (LSP),
- the communication network is a Wavelength Switched Optical Network,
- the communication network is a Packet Switched Data Network,
- the evolution over time of data traffic quantity is predictable and is used to schedule the control of the energy consumption in the communication network.

In a second aspect, the invention deals with an apparatus to perform a method to control energy consumption, comprised in a first node as egress and/or ingress points for data traffic of a communication network, said communication network further comprising:
- a second node as egress and/or ingress points for data traffic,
- a first data path and a second data path between the first node and the second node, said data traffic moving across the first data path and/or the second data path,
   and said apparatus comprises means to:
- set a first and a second data traffic capacity thresholds respectively for the first and second data paths, said first data traffic capacity threshold being greater than said second data traffic capacity threshold,
- associate the second data path with the first data path as an energy consumption associated data path of the first data path,
- set a first path energy mode for the first data path,
- evaluate an ingress and/or egress data traffic quantity on the first node, and,
- if the ingress and/or egress data traffic quantity is less than or equal to the second data traffic capacity threshold, then:
   ○ route the data traffic moving across the first data path to the energy consumption associated data path of the first data path,
   ○ set the first path energy mode of the first data path in a lower energy consumption mode.

### BRIEF DESCRIPTION OF THE FIGURES

Some embodiments of the present invention are now described, by way of example only, and with reference to the accompanying drawings, in which:
- FIG. 1 is a schematic block diagram of a communication network,
- FIG. 2 is a graphical representation of data traffic evolution,
- FIG. 3 is a flowchart showing steps to perform an example of the method to control energy consumption in a communication network,
- FIG. 4 is an arrangement of an ASSOCIATION object.

The same reference number represents the same element to the same type of element on all drawings, unless stated otherwise.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

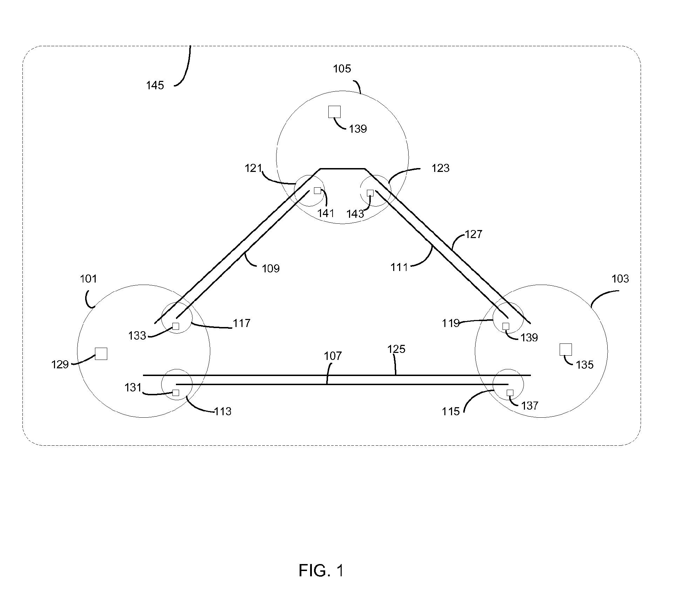

Referring to FIG. 1, a communication network 145 to carry data traffic is depicted. In order not to obscure the invention in unnecessary details, it has been simplified to few elements. In non limiting examples, the communication network 145 is structured on an Ethernet switching network, or an optical switching network.

Said communication network 145 comprises a first node 101, a second node 103 and a third node 105. In non limiting examples, first node 101, second node 103 and third node 105 are IP routers or Ethernet switches, or optical cross-connects, or microwave routers.

The first node 101 comprises a first transceiver device 113 and the second node 103 comprises a second transceiver device 115. The first node 101 further comprises a third transceiver device 117 and the second node further comprises a fourth transceiver device 119. Said first transceiver device (113), second transceiver device (115), third transceiver device (117), fourth transceiver device (119) are able to transmit and receive data. In non limiting examples transceiver devices are optical transponders.

The first node 101 further comprises a first node energy mode 129. The first and third transceiver devices 113 and 117 respectively comprise a first transceiver energy mode 131 and a third transceiver energy mode 133. In non limiting examples, said energy modes control the energy consumption of network equipments or sub-part of network equipments, comprising states like an activated state, idle states, or a deactivated state. It has to be noted that various idle states can be defined, in which the respective energy consumption may be different from one state to another. In non limiting examples, a deep idle state will be used with an energy mode for low energy consumption, whereas a fast idle state will be used in an energy mode to transition quickly from an activated state to a lower energy consumption state. For the purpose of not obscuring the description of embodiments hereinafter, it will be referred to a single idle state.

The second node 103 further comprises a second node energy mode 135. The second and fourth transceiver devices 115 and 119 respectively comprise a second transceiver energy mode 137 and a fourth transceiver energy mode 139.

The third node 105 comprises a fifth transceiver device 121 and a sixth transceiver device 123, able to transmit and receive data. The third node 105 further comprises a third node energy mode 139. The fifth and sixth transceiver devices 121 and 123 respectively comprise a fifth transceiver energy mode 141 and a sixth transceiver energy mode 143.

The communication network 145 further comprises a first data link 107 between the first node 101 and the second node 103. The data link 107 is connecting the first node 101 and the second node 103 through respectively the first transceiver device 113 and the second transceiver device 115. In a non limiting example, data link comprises one or more optical links, number of optical links defining then the data traffic capacity of said data link.

The communication network 145 also comprises a second data link 109 connecting the first node 101 and the third node 105, respectively through the third transceiver device 117 and the fifth transceiver device 121.

The communication network 145 depicts a third data link 111, connecting the third node 105 and the second node 103, respectively through the sixth transceiver device 123 and the fourth transceiver device 119.

Said first data link 107 is comprised in a first data path 125, with the first node 101 as an egress and/or ingress point for data traffic, and with the second node 103 as an egress and/or ingress point for data traffic. The first node 101 and the second node 103 are entry and outgoing points for data to be moved across the first data path (125), similarly as termination points for said data path.

As the first data link 107 belongs to the first data path, the first transceiver device 113 and the second transceiver device 115 are also comprised in the first data path 125. In non limiting example, a data path is a logical path for data, comprising at least two nodes and a data link, and controlled by network elements.

The communication network 145 further comprises a second data path 127. Said second data path 127 comprises the second data link 109 and the third data link 111. The second data path 127 further comprises the first node 101 as an egress and/or ingress point for data traffic, and the third node 105 as an intermediate node for data traffic, and the second node 103 as an egress and/or ingress point for data traffic. The first node 101 and the second node 103 are entry and outgoing points for data to be carried on the second data path (125), similarly as termination points for said data path, whereas the third node 105 relays all the data traffic incoming from the first node 101 and/or the second node 103.

The third transceiver device 117 and the fifth transceiver device 121, connected through the data link 109 are comprised in the second data path 127. The sixth transceiver device 123 and the fourth transceiver device 119, connected through the data link 111 are also comprised in the second data path 127.

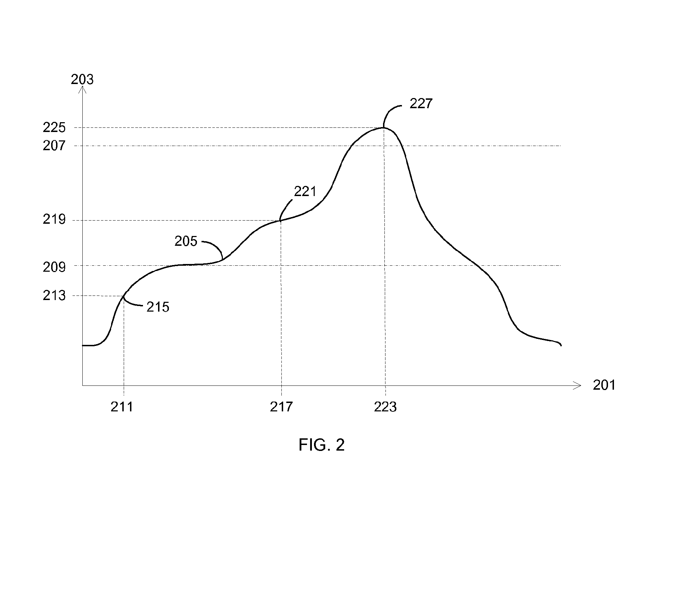

Referring to FIG. 2, an evolution of data traffic quantity over time is exemplified through a curve 205 plotted over a time x-axis 201 and a data quantity y-axis 203; said x-axis and y-axis have no unit as this figure provides only a sample of a potential evolution of data traffic.

A first data traffic capacity threshold 207 associated with the first data path 125 and a second data traffic capacity threshold 209 associated with the second data path 127 are intersecting with data quantity y-axis 203. In a non limiting example, the curve 205 provides data traffic evolution during a period of time of 24 hours. Sections of said curve that are below the second data traffic capacity threshold 209 represent period of lower data traffic volume. Sections of the curve 205 that are above the second data traffic capacity threshold 209 and below the first data traffic capacity threshold 207 are representing period of medium data traffic volume. Section of the curve 205 that is above the second data traffic capacity threshold 207 represents period of high data traffic volume.

In this embodiment and further in the description below, it is assumed that the second data path 127 has a lower data traffic capacity than the first data path 125. Subsequently said second data path 127 requires less energy to transport data traffic than the first data path 125. In a non limiting example, first data path 125 and second data path 127 are optical paths using optical links and optical transponders as transceiver devices. In such example, the second data path 127 has less data traffic capacity than first data path 125 due to a smaller number of optical links and uses less transponder resources, consequently said second data path 127 consumes less energy than the first data path 125.

It is assumed further that the first data path 125 and the second data path 127 are initially in activated state.

Following examples will be described later on:
- a first situation 215 is depicted, and is associated with a first instant 211, and with a first data traffic quantity 213, being the projection of the curve 205 on the y-axis 203 at the instant 211,
- a second situation 221 is also depicted, and is associated with a second instant 217, and with a second data traffic quantity 219, being the projection of the curve 205 on the y-axis 203 at the instant 217,
- a third situation 227 is also depicted and is associated with a third instant 223, and with a third data traffic quantity 225, being the projection of the curve 205 on the y-axis 203 at the instant 223.

The first, second and third situations 215, 221 and 227 will be described later on.

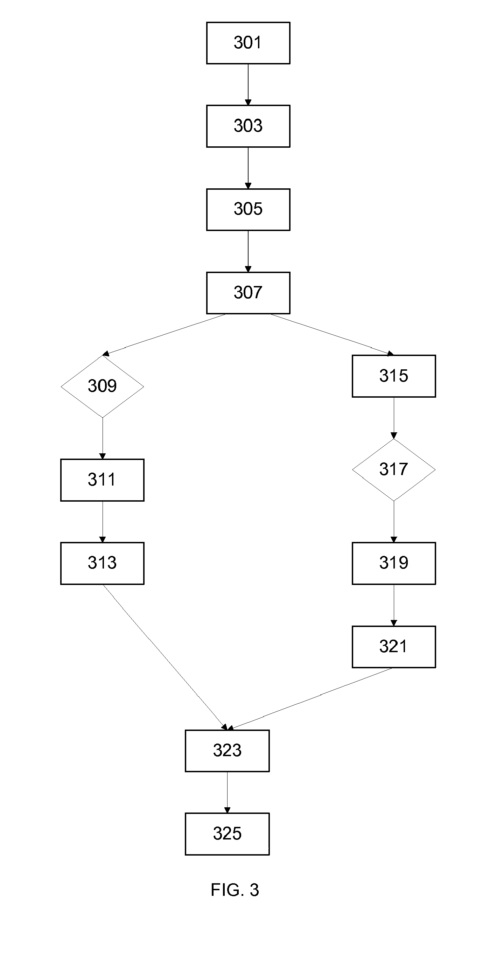

Referring to FIG. 3, a method to control energy consumption in the communication network 145 is schematized. In said communication network, data traffic is moving across first node 101 and second node 103 through the first data path 125 and/or the second data path 127, and said data traffic evolves over time according to the curve 205.

In a first step 301, the first data path 125 is set with the first data traffic capacity threshold 207 and the second data path 127 is set with the second data traffic capacity threshold 209.

In a second step 303, the second data path 127 is associated to the first data path 125, said second data path 127 being referred as an energy consumption associated data path of the first data path 125.

Association of an energy consumption associated data path to the first data path 125 is performed by setting information related to the first data path 125. Said information designates a data path to be linked to the first data path 125, in terms of energy consumption.

In another embodiment, the first data path 125 has a plurality of energy consumption associated data paths.

In a third step 305, the first data path 125 is associated with a first path energy mode. Said first path energy mode reflects the energy consumption of elements of the first data path 125. In non limiting examples, the first path energy mode comprises states like an activated state, an idle state, or a deactivated state.

In an embodiment not depicted on FIG. 3, similarly to the third step 305, the second data path 127 is associated with a second path energy mode. Said second path energy mode reflects the energy consumption of elements of the second data path 127.

In a fourth step 307, a first egress and/or ingress data traffic quantity on the first node 101 is evaluated. The evaluated first egress and/or ingress data traffic quantity comprises all the data to be moved across the first data path 125 and/or the second data path 127, between the first node 101 and the second node 103.

In a non limiting example, the egress and/or ingress data traffic quantity evaluated on the first node 101 or on the second node 103 are the same quantity, said first node 101 and second node 103 are entry and/or outgoing points of data traffic for the first data path 125 and the second data path 127.

In another non limiting example, the first data path 125 and the second data path 127 are tailored to handle the maximum data traffic quantity needed to sustain a busy hour on the communication network 145. In another non limiting example, the second data path 127 is tailored to handle the maximum data traffic quantity needed to sustain non busy hours on the communication network 145.

In another non limiting example, the incoming and outgoing data traffic on the first node 101 and/or the second node 103 is greater than the capacity of the first data path 125 and the second data path 127. In such example, the awaiting data are buffered in the first node 101 and/or the second node 103 or are eventually dropped after a given time duration, according to techniques well-known by the man skilled in the art.

In a fifth step 309, the first egress and/or ingress data traffic is compared to the second data traffic capacity threshold 209. At a sixth step 311, if said data traffic quantity is less than or equal the second data traffic threshold 209, then the data traffic carried on the first data path 125 is routed on the energy consumption associated data path of the first data path 125. In the described embodiment, the data traffic is routed from the first data path 125 to the second data path 127.

Since the data traffic that was moving across the first data path 125, has been routed on the energy consumption associated data path of the first data path 125 accordingly to the sixth step 311, in a seventh step 313, the first data path energy mode of the first data path 125 is set in a lower energy consumption mode, such as an idle state or a deactivated state in non limiting examples. In said idle state, the elements such as the transceiver devices and data links comprised in a data path may be set in a low power consumption state. The deactivated state provides an even lower consumption state for said elements of a data path.

In an eighth step 315, similarly to the second step 303, the first data path 125 is associated to the second data path 127, said first data path 125 being referred as an energy consumption associated data path of the second data path 127.

Similarly to the fourth step 307, a second egress and/or ingress data traffic quantity is evaluated on the first node 101. At a ninth step 317, the second egress and/or ingress data traffic is compared to the second data traffic capacity threshold 209. At a tenth step 319, if said data traffic quantity is greater than the second data traffic threshold 209, then the data traffic that was moving across the second data path 127 is routed on the energy consumption associated data path of the second data path 127. In an embodiment the data traffic is routed from the second data path 127 to the first data path 125.

In an eleventh step 321, the first energy mode of the first data path 101 is set in a higher energy consumption mode. In a non limiting example, prior to the execution of the eleventh step 321, the first data path 125 was in a low power consumption state with the first energy mode being in idle state. At the eleventh step 321, the first energy mode is then set in activated state.

To illustrate, the fourth step 307, the fifth step 309, the sixth step 311, and the seventh step 313, the first situation 215 from FIG.2 is described further.

At the fourth step 307, the data traffic quantity 213 is evaluated. At the fifth step 309, the data traffic quantity 213 is compared to the second data traffic capacity threshold 209. At the sixth step 311, said data traffic quantity 213 being below said second data traffic capacity threshold 209, it is then routed from the first data path 125 to the energy consumption associated data path of the first data path 125. In this embodiment the data traffic is then carried on the second data path 127. At the seventh step 313, the energy mode of the energy consumption associated data path of the first data path 125 is set in a lower consumption mode.

In a non restricting example, in the first situation 215 from FIG.2, the first data path 125 is set in an idle state, wherein the first data path 125 is consuming less energy than in an activated state.

Further to illustrate the fourth step 307, the ninth step 317, the tenth step 319, and the eleventh step 321, the second situation 221 from FIG.2 is described hereinafter.

At the fourth step 307, the data traffic quantity 215 is evaluated. At the ninth step 317, the data traffic quantity 213 is compared to the second data traffic capacity threshold 209. Said data traffic quantity 213 being higher than said second data traffic capacity threshold 209, at the tenth step 319, the data traffic is then routed from the second data path 127 to the energy consumption associated data path of the second data path 127. At the eleventh step 321, the first path energy mode of the first data path 125 is set to a higher energy consumption mode.

In this non limiting example, the first path energy mode is set in a higher energy consumption mode from an idle state to an activated state and the data traffic is then carried on the first data path 125.

Further to illustrate the fourth step 307, sixth step 311, tenth step 319 and the eleventh step 321, the third situation 227 from FIG.2 is described hereinafter.

At the fourth step 307, the data traffic quantity 225 is evaluated. At the sixth step 311 and the tenth step 319, the data traffic quantity 213 is compared to the second data traffic capacity threshold 209. Said data traffic quantity 213 is higher than said second data traffic capacity threshold 209. It is also higher than the first data traffic capacity threshold 207. No further action is performed since the data traffic is already carried on the first data path 125 and the first path energy mode is already in a higher energy consumption mode such as an activated state, according to the execution of the steps for the example 221.

At a twelfth step 323, the first path energy mode is provided to the first node 101 and the second node 103.

In the first situation 215, the first node 101 and the second node 103 are provided with the idle state of the first path energy consumption mode.

In the second situation 221, the first node 101 and the second node 103 are provided with the activated state of the first path energy consumption mode.

At a thirteenth step 325, the first transceiver energy mode 131 associated with the first transceiver device 113 on the first node 101, and the second transceiver energy mode 137 associated with the second transceiver device 115 on the second node 103, are set accordingly to the first path energy mode.

In an embodiment, since at the seventh step 313, the first path energy mode is set in a lower energy consumption mode, the first transceiver energy mode 131 and the second transceiver energy mode 137 are then set in a lower energy mode.

In the non limiting first situation 215, the first transceiver energy mode 131 and the second transceiver energy mode 137 are set in an idle state similarly as the first path energy mode of the first data path 125. In said idle state respectively for the first transceiver energy mode 131 and the second transceiver energy mode 137, the first transceiver device 113 and the second transceiver device 115 are consuming less energy than in an activated mode.

In the non limiting second situation 221, the first transceiver energy mode 131 and the second transceiver energy mode 137 are set in an activated state similarly as the first path energy mode of the first data path 125.

In embodiments not depicted on FIG. 3, the second data path is associated with the second path energy mode. Referring to the second situation 221, while the data traffic is routed from the second data path 127 to the energy consumption associated data path of the second data path 127 according to the tenth step 319, and the first path energy mode is set to a higher energy consumption mode according to eleventh step 321, the second path energy mode is then set in a lower consumption mode. In a non restricting example, the second path energy consumption mode is set in a deactivated mode wherein the second data path 127 consumes less energy than in an activated state or an idle state.

In further embodiments not depicted on FIG. 3, the second path energy mode is provided to the first node 101 and the second node 103 similarly to the twelfth step 323 relating to the first path energy mode.

In yet embodiments not depicted on FIG. 3, similarly to the thirteenth step 325:
- the third transceiver energy mode 133 associated with the third transceiver device 117 on the first node 103, and belonging to the second data path 127,
- the fifth transceiver energy mode 141 associated with the fifth transceiver device 121 on the third node 105, and belonging to the second data path 127,
- the sixth transceiver energy mode 143 associated with the sixth transceiver device 123 on the third node 105, and belonging to the second data path 127,
- and the fourth transceiver energy mode 139 associated with the fourth transceiver device 119 on the second node, and belonging to the second data path 127,
said third energy mode 133, fourth energy mode 139, fifth energy mode 141 and sixth energy mode 143 are set accordingly to the second data path energy mode.

In the non limiting second situation 221, the third energy mode 133, fourth energy mode 139, fifth energy mode 141 and sixth energy mode 143 are set in a deactivated state similarly to the second path energy mode of the second data path 127. In said deactivated mode, the respective third transceiver device 117, fourth transceiver device 119, fifth transceiver device 121 and sixth transceiver device 123 are consuming almost no energy or no energy at all.

In an embodiment not depicted in FIG. 3, a check is performed respectively on the first transceiver energy mode 131 of the first transceiver device 113 comprised in the first node 101, and the third transceiver energy mode 133 of the third transceiver device 117 comprised also in the first node 101. If said check indicates that both the first transceiver energy mode 131 and the third transceiver energy mode 133 are in the same state, such as idle state or deactivated state, the first node energy mode 129 is then set accordingly to said transceiver energy modes. In a non limiting example, if the first transceiver energy mode 131 and the third transceiver energy mode 133 are in idle state, the first node energy 129 is set in idle state, and then the first node 101 consumes less power than in an activated state.

Similarly to previously described embodiment, the second transceiver energy mode 137 and the fourth transceiver energy mode 139 are checked. If said transceiver energy modes are in the same state, the second node energy mode 135 is then set accordingly to the second transceiver energy mode 137 and the fourth transceiver energy mode 139.

In the same manner as above embodiments, the fifth transceiver energy mode 141 and the sixth transceiver energy mode 143 are checked. If said transceiver energy modes are in the same state, the third node energy mode 139 is then set accordingly to the fifth transceiver energy mode 141 and the sixth transceiver energy mode 143.

To illustrate a realization of the invention, in a non limiting example, the communication network 145 is a Generalized Multi-Protocol Label Switching (GMPLS) network. It has to be noted that GMPLS is suitable to manage packet switching technologies such as IP/Multiprotocol Label Switching (IP/MPLS), ATM, Frame-Relay, or other switching technologies such as Time Division Multiplex or wavelength switch. In a further non restricting example, the GMPLS network is a Wavelength Switched Optical Network, operated through Network Management Procedures or Control Plane functions, such as the Resource Reservation Protocol - Traffic Engineering (RSVP-TE) protocol.

The first node 101 and the second node 103 are Label Switching Routers (LSRs) respectively connected to a first Label Edge Router (LER) and a second LER, said LERs are acting as Provider Edges (PE).

The first data link 107 comprised in the first data path 125, the second data link 109 and the third data link 111 comprised in the second data path 127 are respectively optical fibers carrying wavelength multiplexed signals.

Said first data path 125 and second data path 127 are Label Switching Paths (LSPs). Hereinafter first data path 125 will be referred to LSP₁, and second data path 127 will be referred to LSP₂.

In this context, the first node 101 and the second node 103 act as source and target LSRs for the LSP₁. Said first node 101 and second node 103 are also source and target LSPs for the second data path 127 that further comprises an intermediate LSR as the third node 105. Hereinafter the first node 101 will be referred to LSR₁, the second node 103 will be referred to LSR₂ and the third node 105 will be referred to LSR₃.

In this embodiment, the first data capacity threshold 207 and the second data capacity threshold 209 are related to the respective data traffic capacities of LSP₁ and LSP₂, said LSP₂ provides a smaller data traffic capacity than LSP₁. Further in the description of this example, it is assumed that smaller capacity of LSP₂ is related to a smaller energy consumption compared to the energy consumption of LSP₁.

Referring to FIG. 3, at the second step 303, the second data path 127 is set as the energy consumption associated data path of the first data path 125. Subsequently in the described embodiment, LSP₂ is the energy consumption associated data path of LSP₁.

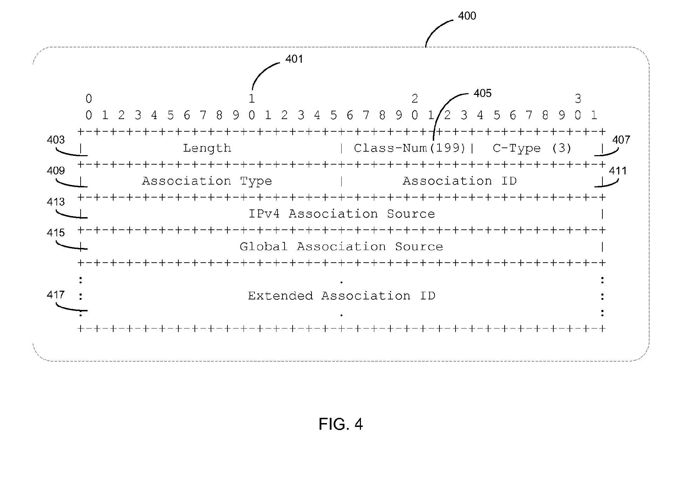

Referring to FIG. 4, a non limiting example of said association of LSP₂ as the energy consumption associated data path of LSP₁ performed at the second step 303, is provided through the description of a first IPv4 extended ASSOCIATION object 400 as specified for the RSVP-TE protocol.

The first IPv4 extended ASSOCIATION object 400 comprises a plurality of bit fields that are aligned to a 32 bit indexing 401. Partial definitions of the bit fields are listed hereinafter, excerpted from a Request For Comments (RFC6780) document from Internet Engineering Task Force:
- the 16 bits object Length 403 is set based on the length of the object Extended Association ID 417,
- the 8 bits object class number Class-Num 405 of the form 11bbbbbb with value equals 199, to ensure compatibility with non-supporting nodes,
- the 8 bits object class type C-type 407 with value equals 3 for IPv4,
- the 32 bits object IPv4 Association Source 413 that is associated to the node that originated the association,
- the 32 bits object Global Association Source 415 that contains a value that is a unique global identifier or the special value zero,
- the variable number of bits length object Extended Association ID 417 that contains additional information to support unique identification,
- the 16 bits object Association ID 411 that contains a value assigned by the LSP head-end. When combined with the Association Type 409 and IPv4 Association Source 413, this value uniquely identifies an association,
- the 16 bits object Association Type 409 that indicates the type of association being identified.

In an embodiment of the invention, for the purpose of setting the LSP₂ as the first energy consumption associated data path of LSP₁, a dedicated value for the object Association Type 409 is specified. In a non limiting example, the dedicated value is specifying a Power Saving Associated LSPs in the object Association Type 409.

In another non limiting example, the dedicated value is 7.

In another embodiment, the combination of the dedicated value of the object Association Type 409 with other objects of the first IPv4 extended ASSOCIATION object uniquely identifies LSP₂ as the energy consumption associated data path of LSP₁.

In yet another embodiment, LSP₁ is set as the energy consumption associated data path of LSP₂, said association is achieved with a second IPv4 extended ASSOCIATION object. The combination of the dedicated value for the object Association Type 409 and other objects from the second IPv4 extended ASSOCIATION object, uniquely identifies LSP₁ as the energy consumption associated data path of LSP₂.

In another embodiment of the invention not depicted in FIG. 4, association of LSP₂ as the energy consumption associated data path of LSP₁ is achieved with an IPv6 extended ASSOCIATION object as specified for the RSVP-TE protocol. IPv6 extended ASSOCIATION object is sharing common bit fields with the first IPv4 extended IPv4 extended ASSOCIATION object, and specifically corresponding object Association Type 409 is specified in the same manner.

In another embodiment of the invention not depicted in FIG. 4, a list of a plurality of LSPs associated respectively with a plurality of data capacity thresholds is ordered as a function of capacity of said LSPs. Said LSPs are listed accordingly to their respective energy consumption associated data paths provided by a plurality of ASSOCIATION objects.

In yet another embodiment not depicted in FIG. 4, the first path energy mode is provided to LSR₁ and/or LSR₂ through an administrative status object (referred as Admin Status herein below) comprised in a first Path message according to the RSVP-TE protocol. Similarly the second path energy mode is provided to LSR1 and/or LSR₂ through an Admin Status object comprised in a second Path message. A first and second Resv messages, according to the RSVP-TE protocol, may comprise also an Admin Status to provide to LSR1 and/or LSR2, the first and second path energy modes.

In RSVP-TE specifications, Admin Status object is used to configure each node along the path according to the status of the LSP. In a non limiting example, Admin Status object indicates the first path energy mode and the second path energy mode, said modes designate either an activated state or a deactivated state or an idle state.

Each time first path energy mode of LSP1 and/or second path energy mode of LSP₂ are modified, LSR₁ issues a Path or Resv message comprising an Admin Status reflecting the new energy mode of the LSP₁ and/or LSP₂, to the LSR₂.

Similarly, the second node 103 may issue a Path or Resv message upon modification of first path energy mode of LSP₁ and/or modification of second path energy mode of LSP₂.

In yet another embodiment, the Admin Status object may also be carried in a Notify message according to the RSVP-TE protocol.

In another embodiment, the evolution of the curve 205 as depicted in FIG.2 is predictable as the data traffic profile on a per day basis is similar from a day to another. A schedule of the control of the energy in the communication network 145 according to described embodiments herein above may be then decided.

In another illustration of a realization of the invention, in a non limiting example, the various embodiments described herein above apply to a communication network (145) operated through a Software-defined Networking (SDN) controller for the control plane, in cooperation with a command interface with network equipments such as OpenFlow communication protocol for the data plane.

In another not limited embodiment, the method to control energy consumption is distributed across network routing elements, such as in a non limited example, the first node (101) and the second node (103).

In another not limited embodiment, not described in the figures, the nodes of the communication network (145) are comprising a variety of apparatus to perform the method to control energy consumption in the communication network (147). In a non limited example, the first node (101) comprises a first apparatus with means to:
- set the first (207) and the second (209) data traffic capacity thresholds respectively for the first (125) and second (127) data paths, said first data traffic capacity threshold (207) being greater than said second data traffic capacity threshold (209),
- associate the second data path (127) with the first data path (125) as the energy consumption associated data path of the first data path (125),
- set the first path energy mode for the first data path (125),
- evaluate an ingress and/or egress data traffic quantity on the first node (101), and,
- if the ingress and/or egress data traffic quantity is less than or equal to the second data traffic capacity threshold (209), then:
   ○ route the data traffic moving across the first data path (125) to the energy consumption associated data path of the first data path (125),
   ○ set the first path energy mode of the first data path (125) in a lower energy consumption mode.

In another not limited embodiment, not described in the figures, the method to control energy consumption in a communication network is performed by a central management system, said system is well-known to the man skilled in the art to supervise the communication network (145).

The detailed embodiments hereinabove describe a method control energy consumption in a communication network, and particularly to set the energy consumption modes of data paths accordingly to the data traffic quantity to be carried on the communication network.

It should be appreciated by those skilled in the art that any block diagrams herein represent conceptual views of illustrative circuitry embodying the principles of the invention. Similarly, it will be appreciated that any flow charts, flow diagrams and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A method to control energy consumption in a communication network (145) that comprises a first node (101) and a second node (103) as egress and/or ingress points for data traffic, and a first data path (125) and a second data path (127) between the first node (101) and the second node (103), said data traffic moving across the first data path (125) and/or the second data path (127), said method comprising the following steps:
- setting (301) a first (207) and a second (209) data traffic capacity thresholds respectively for the first (125) and second (127) data paths, said first data traffic capacity threshold (207) being greater than said second data traffic capacity threshold (209),
- associating (303) the second data path (127) with the first data path (125) as an energy consumption associated data path of the first data path (125),
- setting (305) a first path energy mode for the first data path (125),
- evaluating (307) an ingress and/or egress data traffic quantity on the first node (101), and,
- if the ingress and/or egress data traffic quantity is less than or equal to the second data traffic capacity threshold (209), then:
○ routing (311) the data traffic moving across the first data path (125) to the energy consumption associated data path of the first data path (125),
○ setting (313) the first path energy mode of the first data path (125) in a lower energy consumption mode.

2. A method according to claim 1, wherein the lower energy consumption mode comprises an idle state or a deactivated state.

3. A method according to claims 1 or 2, comprising the following steps:
- associating (315) the first data path (125) with the second data path (127) as an energy consumption associated data path of the second data path (127),
- if the ingress and/or egress data traffic quantity is greater than the second data traffic capacity threshold (209), then:
○ routing (319) the data traffic moving across the second data path (127) to the energy consumption associated data path of the second data path (127),
○ setting (321) the first path energy mode in a higher energy consumption mode.

4. A method according to claim 3, wherein the higher energy consumption mode comprises an activated state.

5. A method according to any of the claims 1 to 4, comprising a step of providing (323) to the first node (101) and to the second node (103), the first path energy mode as lastly set.

6. A method according to claim 5, wherein the first data path (125) further comprising a first transceiver device (113) with a first transceiver energy mode (131) on the first node (101), and a second transceiver device (115) with a second transceiver energy mode (137) on the second node (103); said method further comprising a step of setting (325) the first transceiver energy mode (131) and the second transceiver energy mode (137) accordingly to the first path energy mode.

7. A method according to any of the claims 1 to 6, wherein the communication network (145) is operated through Network Management Procedures or Control Plane Functions including the Resource Reservation Protocol - Traffic Engineering (RSVP-TE).

8. A method according to claim 7, wherein the energy consumption associated data path of the first data path (125) and the energy consumption associated data path of the second data path (127) are identified by a dedicated value for the object Association Type (409) of an ASSOCIATION Object (400), and by combining said dedicated value with other objects of the ASSOCIATION Object (400), according to the RSVP-TE protocol.

9. A method according to claim 8, wherein the dedicated value for the object Association Type (409) is a value not already allocated by Internet Assigned Number Authority (IANA), including the value 7.

10. A method according to claim 5 and 7, wherein the first path energy mode is provided to the first node (101) and the second node (103) through Path and Resv messages or Notify messages.

11. A method according to any of the claim 1 to 10, wherein the communication network (145) is a Generalized Multi-Protocol Label Switching (GMPLS) network and the first data path (125) and the second data path (127) are label-switched path (LSP).

12. A method according to claim 11, wherein the communication network (145) is a Wavelength Switched Optical Network.

13. A method according to claim 11, wherein the communication network (145) is a Packet Switched Data Network.

14. A method according to any of the claim 1 to 12, wherein the evolution over time of data traffic quantity is predictable and is used to schedule the control of the energy consumption in the communication network (145).

15. An apparatus to perform a method to control energy consumption, comprised in a first node (101) as egress and/or ingress points for data traffic of a communication network (145), said communication network further comprising:
- a second node (103) as egress and/or ingress points for data traffic,
- a first data path (125) and a second data path (127) between the first node (101) and the second node (103), said data traffic moving across the first data path (125) and/or the second data path (127),
and said apparatus comprising means to:
- set a first (207) and a second (209) data traffic capacity thresholds respectively for the first (125) and second (127) data paths, said first data traffic capacity threshold (207) being greater than said second data traffic capacity threshold (209),
- associate the second data path (127) with the first data path (125) as an energy consumption associated data path of the first data path (125),
- set a first path energy mode for the first data path (125),
- evaluate an ingress and/or egress data traffic quantity on the first node (101), and,
- if the ingress and/or egress data traffic quantity is less than or equal to the second data traffic capacity threshold (209), then:
○ route the data traffic moving across the first data path (125) to the energy consumption associated data path of the first data path (125),
○ set the first path energy mode of the first data path (125) in a lower energy consumption mode.
